# EUROPÄISCHE PATENTSCHRIFT

(11) **EP 0 435 078 B1**
(45) Veröffentlichungstag und Bekanntmachung des Hinweises auf die Patenterteilung: **15.02.1995**
(21) Anmeldenummer: 90123969.9
(22) Anmeldetag: 12.12.1990
(51) Int. Cl.: B29C 47/16

(54) **Extrusionsdüse zur Herstellung von Hohlkammerplatten**
Extrusion orifice for producing cored panels
Filière d'extrusion pour fabriquer des panneaux creux

(30) Priorität: 23.12.1989 DE 8915137 U
(43) Veröffentlichungstag der Anmeldung: 03.07.1991
(73) Patentinhaber: Röhm GmbH, 64293 Darmstadt (DE)
(72) Erfinder: Lorenz, Hans, W-6100 Darmstadt (DE); Gross, Heinz, Dr.-Ing., W-6101 Rossdorf 1 (DE)

(56) Entgegenhaltungen:
- DE-A- 3 731 961
- DE-C- 3 427 912
- DE-C- 3 530 383
- US-A- 3 940 221

## Beschreibung

Die Erfindung betrifft eine Extrusionsdüse zur Herstellung von Hohlkammerplatten aus thermoplastischem Kunststoff, beispielsweise aus Polymethylmethacrylat, Polycarbonat oder Polyvinylchlorid.

Bekannte Extrusionsdüsen für diesen Zweck enthalten gemäß DE-A 15 04 800 zwei über die Breite der Extrusionsdüse geradlinig und parallel verlaufende, durch Lippen 4,5 gebildete Schlitze 1 zur Extrusion von zwei parallelen ebenen Außenwänden der Hohlkammerplatte und ein Kernstück 2, das zwischen den Schlitzen 1 angeordnet ist und in das eine Vielzahl von Querschlitzen 3 eingeschnitten ist, die in die Schlitze 1 münden und zur Extrusion von Stegen dienen, welche die Außenwände der extrudierten Hohlkammer miteinander verbinden. Vorzugsweise sind die Querschlitze 3 rechtwinklig zu den Schlitzen 1 angeordnet.

Die mit derartigen Extrusionsdüsen erzeugten Hohlkammerplatten, die auch als Stegplatten oder Stegdoppelplatten bezeichnet werden, haben im Bauwesen eine bedeutende Stellung erlangt. Häufig werden rechtwinklig begrenzte Abschnitte solcher Hohlkammerplatten in der Weise waagerecht oder schwach geneigt verlegt, daß ihre in Extrusionsrichtung verlaufenden Seitenkanten auf einer geeigneten Unterkonstruktion aufliegen und die dazwischen liegende Fläche des Abschnittes sich frei trägt. Das setzt eine ausreichende Quersteifigkeit voraus, die außer dem Eigengewicht gegebenenfalls auch zusätzliche Verkehrslasten, wie Winddruck oder Schneelast, berücksichtigen muß. Um diese Quersteifigkeit bei einer Breite von 1 bis 1,2 m zu gewährleisten, ist in der bauaufsichtlichen Zulassung für Hohlkammerplatten aus PMMA ein Flächengewicht von mindestens 4,7 kg/qm vorgeschrieben. Diese Vorschrift geht von der Annahme aus, daß eine gleichhohe Quersteifigkeit bei einem geringeren Flächengewicht nicht zu erreichen wäre. Sie setzt dem Bedarf an Kunststoff für die Herstellung von Hohlkammerplatten eine untere Grenze.

### Aufgabe und Lösung

Ziel der Erfindung ist, eine verbesserte Extrusionsdüse zu schaffen, mit der Hohlkammerplatten von gleichhoher Quersteifigkeit bei niedrigerem Flächengewicht oder höherer Quersteifigkeit bei gleichem Flächengewicht herstellbar sind.

Bei den bekannten gattungsmäßigen Extrusionsdüsen werden die Außenwände der Hohlkammerplatten durch starre Lippen erzeugt. Der Zustrom der thermoplastischen Kunststoff-Formmasse innerhalb der Extrusionsdüse zu den Lippen wird in der Regel durch einen Staubalken beeinflußt, der aus konstruktiven Gründen eine beträchtliche Steifigkeit hat, aber in begrenztem Ausmaß einstellbar ist, um einen gleichmäßigen Formmassenaustritt über die ganze Breite der Extrusionsdüse zu gewährleisten. Durch den Staubalken lassen sich Unterschiede der Strömungswiderstände der Formmasse zwischen der Mitte und den Enden der Extrusionsdüse weitgehend ausgleichen, so daß die Dicken der Außenwände über die ganze Breite der extrudierten Hohlkammerplatte im wesentlichen gleich sind.

Es wurde nun gefunden, daß die Quersteifigkeit der extrudierten Hohlkammerplatte verbessert werden kann, wenn man zu ihrer Herstellung eine Extrusionsdüse der gattungsmäßigen Art verwendet, die keinen Staubalken enthält und bei der jeweils eine der beiden Lippen, die die Schlitze bilden, flexibel ausgebildet und am Ende einer sich über die Düsenbreite erstreckenden elastischen Zunge angeordnet ist und die flexible Lippe durch eine Mehrzahl voneinander unabhängiger Stellglieder verstellbar ist und die elastische Zunge eine größere Länge (in Fließrichtung) hat als die Querschlitze. Die flexiblen Lippen lassen sich während der Extrusion mit großer Genauigkeit auf die Sollstärke der Außenwände einstellen.

Die Quersteifigkeit der Hohlkammerplatte hängt entscheidend von der der Außenwände ab. Diese wird wiederum durch Dickenschwankungen der Außenwände beeinflußt. Es wurde festgestellt, daß die Quersteifigkeit einer Kunststoffplatte von ungleichmäßiger Dicke nicht größer ist als diejenige einer völlig gleichmäßigen Platte, die so dick wie die dünnsten Stellen der ungleichmäßigen Platte ist. Für die Quersteifigkeit ist das Material, das in den Dickenschwankungen der ungleichmäßigen Platte enthalten ist, verloren.

Durch die erfindungsgemäß in der Extrusionsdüse vorhandenen einstellbaren flexiblen Lippen läßt sich die Dicke der Außenwände wesentlich genauer als mit herkömmlichen Extrusionsdüsen, die starre Lippen haben, auf die Sollstärke einstellen. Die Quersteifigkeit der damit extrudierten Hohlkammerplatte entspricht im wesentlichen der Sollstärke und ist nicht durch Dickenminima, die sich bei herkömmlichen Extrusionsdüsen unvermeidbar ergeben, vermindert. Die Dickenschwankungen von herkömmlich erzeugten Extrudaten beruht auf Messestromschwankungen über die Breite der Extrusionsdüse, die eine Reihe von Ursachen haben können. Dazu gehören Mängel in der Auslegung oder der Ausführung des Verteilerkanals, Temperaturunterschiede in der Formmassenschmelze oder im Düsenkörper oder Abweichungen vom ursprünglich vorgesehenen Betriebspunkt der Düse.

Bei vorgegebenen Anforderungen an die Quersteifigkeit kann die Sollstärke der Außenwände so niedrig wie das Dickenminimum einer herkömmlichen Hohlkammerplatte mit ungleichmäßigen Außenwänden von entsprechend höherer Sollstärke bemessen werden. Bei Verwendung von herkömmalichen Extrusionsdüsen mit starren Lippen treten an den Außenwänden Dickenschwankungen bis zu ± 20 %, manchmal bis zu 40 % auf; sie lassen sich weder durch eine aufwendige Temperaturkontrolle noch durch eine Feinsteuerung der Staubalkeneinstellung vermeiden. Durch die erfindungsgemäße Extrusionsdüse lassen sich die Dickenschwankungen auf ± 5 % vermindern. Dadurch kann die Sollstärke um bis zu 15 % vermindert werden. Unter Berücksichtigung des Gewichtes der Stege ergibt sich daraus eine Verminderung des Flächengewichts der Hohlkammerplatte bis zu 10 % bei gleichbleibender Quersteifigkeit. Ein besonderer Vorteil der erfindungsgemäßen Extrusionsdüse liegt darin, daß auf einen Staubalken völlig verzichtet wird, da der Formmassenstrom durch die Flexlippen allein steuerbar ist.

### Ausführung der Erfindung

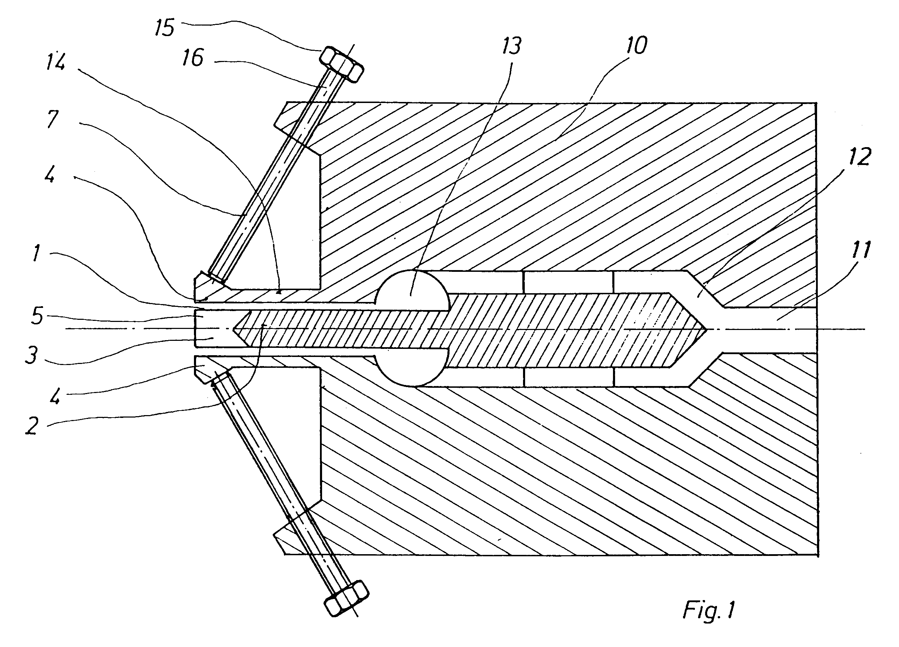

Eine zweckmäßige Gestaltung der erfindungsgemäßen Extrusionsdüse geht aus **Figur 1** hervor, die einen Querschnitt durch die Düse zeigt.

Die Extrusionsdüse 10 enthält einen Eintrittskanal 11 für die thermoplastische Formmasse, der an einen Extruder angeschlossen werden kann. Der Eintrittskanal 11 wird innerhalb der Düse in zwei Zuführungskanäle 12 geteilt, aus denen die Formmasse in die quer über die ganze Düsenbreite angeordneten Verteilerkanäle 13 gelangt. Von dort tritt die geschmolzene Formmasse in die Schlitze 1 beiderseits des Kernstücks 2 ein. Ein Teil der Formmasse strömt aus den Schlitzen 1 in die Querschlitze 3 ein, die in das Kernstück 2 eingeschnitten sind, und bildet beim Austritt aus den Querschlitzen die Stege der Hohlkammerplatte. An den Lippen 4/5 tritt die Formmasse in Form der Außenwände der Hohlkammerplatte aus. Der extrudierte, thermoplastische Hohlstrang wird in einem (nicht dargesstellten) Vakuumformkanal, der dicht hinter der Extrusionsdüse 10 angeordnet ist, unter die Erweichungstemperatur gekühlt und erhält dabei seine endgültige Gestalt.

Erfindungsgemäß ist jeweils eine der beiden Lippen 4,5, die die Schlitze 1 bilden, flexibel ausgebildet. Zu diesem Zweck ist die Lippe 4 am Ende einer sich über die Düsenbreite erstreckenden Zunge 14 angeordnet, deren Länge und Dicke so bemessen sind, daß sich die Lippe 4 mittels der Stellglieder 7 elastisch in den Schlitz 1 hineindrücken läßt, wodurch dessen lichte Weite vermindert wird. Eine solche Anordnung wird in der Fachsprache als "Flexlippe" bezeichnet und wird sonst nur bei der Extrusion dünner Folien angewendet. Die elastische Zunge 14 hat - in Fließrichtung gemessen - eine größere Länge als die Querschlitze 3.

Der elastische Biegungsspielraum der Flexlippe unter der Einwirkung der Stellglieder 7 liegt in der Größenordnung von 0,01 bis 0,5 mm. Bei der Extrusion dünner Folien läßt sich der Massestrom der extrudierten Folienbahn mittels einer Flexlippe lokal beispielsweise um bis zu 50 % vermindern. Die Außenwände einer extrudierten Hohlkammerplatte sind jedoch wesentlich dicker, z.B. 0,5 bis 3 mm. Infolgedessen ist der Einfluß der Flexlippe auf die Dicke der extrudierten Bahn relativ viel geringer; er liegt in der Größenordnung von höchstens 30 %.

Zweckmäßig ist die erfindungsgemäße Extrusionsdüse symmetrisch zu dem Kernstück 2 aufgebaut, so daß beide Schlitze 1 in gleicher Weise regulierbar sind. Für die Regulierung der Schlitzbreite ist es ausreichend, wenn jeweils eine der Lippen 4/5, die einen Schlitz 1 bilden, flexibel ausgebildet ist. Vorzugsweise sind dies die außen liegenden Lippen 4.

Die freiliegenden Außenseiten der Extrusionsdüse 10 sowie die außenliegenden Seiten der Zungen 14 können mit thermischen Isolierungen oder Heizmänteln versehen werden, um eine gleichmäßige Temperaturführung zu gewährleisten.

Als Stellglieder 7 können Schraubbolzen verwendet werden, die sich mittels des Kopfes 15 einstellen lassen. Je enger die Stellglieder 7 nebeneinander angeordnet sind, um so feiner läßt sich die Schlitzdicke regulieren. Die Achsen-Abstände der Stellglieder können z.B. 8 bis 40 mm betragen. Vorzugsweise werden kurze Schraubbolzen 16 zur Grobeinstellung verwendet, während zur Feinregulierung elektrische Dehnbolzen oder Piezotranslatoren dienen können, die koaxial zur den Schraubbolzen 16 angeordnet sind. Sie können über ein Regler mit Dickenmeßfühlern verbunden sein, die die Dicke der Außenwände in dem zugehörigen Bereich der extrudierten Hohlkammerplatte messen und eine entsprechende Meßgröße an den Regler abgeben. Für die Dickenmessung eignet sich beispielsweise eine Absorptionsmessung in einem Spektralbereich, in dem die extrudierte Formmasse eine Strahlung in Abhängigkeit von der Schichtdicke absorbiert. Auf diese Weise kann ein Sollwert für die vorgesehene Dicke der Außenwände der Hohlkammerplatte, der in das Steuerorgan eingegeben ist, automatisch mit dem gemessenen Istwert verglichen und in eine geeignete Steuergröße für die Einstellung der elektrischen Dehnbolzen oder Piezotranslatoren umgesetzt werden.

## Patentansprüche

1. Extrusionsdüse zur Herstellung von Hohlkammerplatten, enthaltend zwei über die Breite der Extrusionsdüse geradlinig und parallel verlaufende, durch verstellbare Lippen (4,5) gebildete Schlitze (1) zur Extrusion von zwei parallelen ebenen Außenwänden der Hohlkammerplatte und ein Kernstück (2), das zwischen den Schlitzen (1) angeordnet ist und in das eine Vielzahl von Querschlitzen (3) eingeschnitten ist, die in die Schlitze (1) münden und zur Extrusion von Stegen dienen, welche die Außenwände der extrudierten Hohlkammer miteinander verbinden,
dadurch gekennzeichnet,
daß die Extrusionsdüse keinen Staubalken enthält, daß jeweils eine der beiden Lippen (4,5), die die Schlitze (1) bilden, flexibel ausgebildet und am Ende einer sich über die Düsenbreite erstreckenden elastischen Zunge (14) angeordnet ist und daß die flexible Lippe (4) durch eine Mehrzahl voneinander unabhängiger Stellglieder (7) verstellbar ist und die elastische Zunge (14) eine größere Länge (in Fließrichtung) hat als die Querschlitze (3).

2. Extrusionsdüse nach Anspruch 1, dadurch gekennzeichnet, daß die Querschlitze (3) rechtwinklig zu den Schlitzen (1) angeordnet sind.

3. Extrusionsdüse nach Anspruch 1 oder 2, dadurch gekennzeichnet, daß sie als Stellglieder (7) elektrisch beiheizte Dehnbolzen oder Piezotranslatoren enthält.

4. Extrusionsdüse nach Anspruch 3, dadurch gekennzeichnet, daß die elektrische beheizten Dehnbolzen oder Piezotranslatoren über einen Regler mit Dickenmeßfühlern, die die Dicke der Außenwände in dem zugehörigen Bereich der extrudierten Hohlkammerplatte messen, verbunden sind.

## Claims

1. An extrusion die for producing cavity plates, having two slots (1) formed by adjustable lips (4, 5) which extend rectilinearly and in parallel over the width of the extrusion die for the extrusion of two parallel flat outer walls of the cavity plate, and a core (2) arranged between the slots (1), into which a plurality of transverse slots (3) are cut which enter into the slots (1) and serve to extrude crosspieces connecting the outer walls of the extruded cavity chamber with one another, characterised in that the extrusion die does not contain a baffle beam, that in each case one of the two lips (4, 5) forming the slots (1) are flexible and arranged at the end of a resilient tongue (14) extending over the width of the die, and that the flexible lip (4) is adjustable by a plurality of adjusting members (7) which are independent of one another and the resilient tongue (14) has a greater length (in the direction of flow) than the transverse slots (3).

2. An extrusion die according to claim 1, characterised in that the transverse slots (3) are arranged at right angles to the slots (1).

3. An extrusion die according to claim 1 or 2, characterised in that it contains electrically heated expansion bolts or piezo-translaters as adjusting members (7).

4. An extrusion die according to claim 3, characterised in that electrically heated expansion bolts or piezo-translaters are connected via a control with thickness sensors which measure the thickness of the outer walls in the relevant region of the extruded cavity plate.

## Revendications

1. Filière d'extrusion pour la fabrication de plaque-a à chambre creuse, contenant deux fentes (1) qui s'étendent en ligne droite et parallèlement sur toute la largeur de la filière d'extrusion et qui dont formées par des lèvres réglables (4, 5), pour l'extrusion de deux parois extérieures, planes et parallèles, de la plaque à chambre creuse, et une pièce de noyau (2) qui est disposée entre les fentes (1) et dans laquelle sont creusées plusieurs fentes transversales (3) qui débouchent dans les fentes (1) et servent à l'extrusion d'entretoises qui relient entre elles les parois extérieures de la chambre creuse extrudée, caractérisée en ce que la filière d'extrusion ne contient pas de traverse de retenue, en ce que l'une des deux lèvres (4, 5) qui forment chaque lente (1) est réalisée sous forme flexible et est disposée à l'extrémité d'une lame flexible (14) s'étendant sur toute la largeur de la filière, et en ce que la lèvre flexible (4) est réglable au moyen de plusieurs organes de réglage (7) indépendants les uns des autres et la lame élastique (14) a une plus grande longueur (dans la direction de l'écoulement) que les fentes transversales (3).

2. Filière d'extrusion selon la revendication 1, caractérisée en ce que les fentes transversales (3) sont disposées à angle droit par rapport aux fentes (1).

3. Filière d'extrusion selon la revendication 1 ou 2, caractérisée en ce qu'elle contient, en tant qu'organes de réglage (7), des broches extensibles par dilatation ou des piézo-translateurs chauffés électriquement.

4. Filière d'extrusion selon la revendication 3, caracterisée en ce que les broches extensibles par dilatation ou les piézo-translateurs chauffés électriquement sont relies, par l'intermédiaire d'un régulateur, à des détecteurs de mesure d'épaisseur qui mesurent l'épaisseur des parois extérieures dans la région correspondante de la plaque à chambre creuse extrudée.
